# EUROPÄISCHE PATENTANMELDUNG

(11) **EP 4 760 008 A1**
(43) Veröffentlichungstag der Anmeldung: **17.06.2026**
(21) Anmeldenummer: 25221810.2
(22) Anmeldetag: 09.12.2025
(51) Int. Cl.: E02F 9/24, E02F 9/26

(54) **WARNVORRICHTUNG ZUM WARNEN VOR EINEM KOLLISIONSOBJEKT**

(30) Priorität: 13.12.2024 DE 102024137701
(71) Anmelder: MEKRA Lang GmbH & Co. KG, 91465 Ergersheim (DE)
(72) Erfinder: Scheffold, Michael, 91438 Bad Windsheim (DE); Hutzler, Oliver, 97215 Uffenheim (DE); Enz, Andreas, 91593 Burgbernheim (DE)
(74) Vertreter: Winter, Brandl - Partnerschaft mbB

(57) **Zusammenfassung**

Offenbart ist eine Warnvorrichtung (1) zum Warnen eines Bedieners (38) eines Fahrzeugs (36) vor einem Kollisionsobjekt (52) während einer Bedienung mit: einer Aufmerksamkeitsbereich-Bestimmungseinheit (2), die ausgebildet ist, um einen Aufmerksamkeitsbereich (50), der ein Bereich ist, auf den eine Aufmerksamkeit des Bedieners (38) gerichtet ist, zu bestimmen, einer Umgebungsüberwachungseinheit (4), die ausgebildet ist, um eine Umgebung um das Fahrzeug (36) herum zumindest teilweise zu überwachen, eine Kollisionsgefahr für ein Objekt, das in der überwachten Umgebung vorhanden ist, zu bestimmen, und ein Objekt, für das eine Kollisionsgefahr besteht und das außerhalb des Aufmerksamkeitsbereichs (50) vorhanden ist, als das Kollisionsobjekt (52) zu erfassen, und einer Ausgabeeinheit (6), die ausgebildet ist, um ein Warnsignal beim Erfassen des Kollisionsobjekts (52) auszugeben.

## Beschreibung

Die vorliegende Offenbarung betrifft eine Warnvorrichtung zum Warnen eines Bedieners eines Fahrzeugs vor einem Kollisionsobjekt.

Es ist bekannt, dass bei der Bedienung eines Fahrzeugs, wie etwa einer Arbeitsmaschine oder einer Baumaschine, beispielsweise auf einer Baustelle, eine Aufmerksamkeit eines Bedieners auf eine mit dem Fahrzeug durchgeführte Tätigkeit (zum Beispiel auf ein Baggern mit einer Baggerschaufel) gerichtet ist. Folglich besteht eine Gefahr, dass ein sich annäherndes Objekt, wie etwa ein Fahrzeug oder eine Person, oder ein stationäres Objekt in der Nähe des Fahrzeugs bei der Bedienung des Fahrzeugs übersehen wird oder unberücksichtigt bleibt. Demzufolge kann mit dem sich annäherden Objekt oder dem stationären Objekt eine Kollision erfolgen, die oftmals einen Schaden evtl. sogar bis zu einer Unbrauchbarkeit des Fahrzeugs mit sich bringt.

Es ist daher Aufgabe der vorliegenden Offenbarung, eine Warnvorrichtung zum Warnen eines Bedieners eines Fahrzeugs, die den Bediener vor einem Kollisionsobjekt warnt, bereitzustellen.

Diese Aufgabe wird durch die Warnvorrichtung mit den Merkmalen gemäß dem unabhängigen Anspruch gelöst. Vorteilhafte Ausführungsformen sind Gegenstand der abhängigen Ansprüche.

Eine offenbarungsgemäße Warnvorrichtung ermöglicht ein Warnen eines Bedieners eines Fahrzeugs vor einem Kollisionsobjekt während einer Bedienung. Das Fahrzeug kann beispielsweise ein Lastkraftwagen (LKW) eine Arbeitsmaschine oder eine Baumaschine sein. Das Fahrzeug kann insbesondere ein Bagger (Kettenbagger oder Radbagger), ein Radlader, eine Planierraupe, ein Grader, eine Walze, ein Muldenkipper, ein Traktor, ein Mähdrescher, ein Feldhäcksler, eine Pflanzmaschine, ein Harvester, ein Rückewagen, ein Holzstapler, eine Forstraupe, eine Kehrmaschine, ein Müllfahrzeug, ein Schneepflug, ein Streufahrzeug, ein Unimog, eine fahrbare Hebebühne, ein Bohrgerät, ein Asphaltiergerät, ein Rasenmähertraktor, ein Grubenfahrzeug, eine Tunnelbohrmaschine, eine Betonpumpe, ein Feuerwehrfahrzeug oder ein mobiler oder stationärer Kran sein. Unter der Bedienung des Fahrzeugs wird ein Betrieb des Fahrzeugs außerhalb des öffentlichen Straßenverkehrs verstanden. D. h., das Fahrzeug wird zur Verrichtung von Arbeit oder zum Zweck eines Rangierens betrieben.

Die Warnvorrichtung umfasst eine Aufmerksamkeitsbereich-Bestimmungseinheit, die ausgebildet ist, um einen Aufmerksamkeitsbereich, der ein Bereich ist, auf den eine Aufmerksamkeit des Bedieners gerichtet ist, zu bestimmen. Die Aufmerksamkeitsbereich-Bestimmungseinheit kann dazu eine oder mehrere aus dem Stand der Technik bekannte Methoden einsetzen. Beispielsweise kann ein Gesicht des Bedieners erfasst und verfolgt bzw. getrackt werden, um eine Ausrichtung des Kopfs des Bedieners zu bestimmen. Es können die Augen des Bedieners beispielsweise mittels Bilderkennung erfasst und verfolgt (sog. Eye-Tracking) werden, um die Blickrichtung des Bedieners zu bestimmen. Weiterhin kann die Haltung des Bedieners beispielsweise durch eine entsprechende Sensorik bestimmt werden, die insbesondere in einem Sitz, auf dem der Bediener sitzt, angeordnet ist. Durch die so ermittelten Informationen ist es möglich, einen räumlichen Bereich zu ermitteln, auf den die Aufmerksamkeit des Bedieners gerichtet ist. Bei der Bestimmung des Aufmerksamkeitsbereichs kann ein übliches Gesichtsfeld, insbesondere ein binokulares Gesichtsfeld, eines Menschen angenommen werden. Beispielsweise kann ein Mensch in der Horizontalen einen Bereich von etwa 210° erfassen. In der Vertikalen beträgt der Bereich zwischen 60° und 70° nach oben und zwischen 70° und 80° nach unten. Von den angegebenen Bereichen kann noch ein Sicherheitsbereich, z.B. 10°, abgezogen werden, um eine sichere Festlegung des Gesichtsfelds zu ermöglichen. Es ist anzumerken, dass der Aufmerksamkeitsbereich nicht auf eine bestimmte Fokusebene begrenzt ist. Der Aufmerksamkeitsbereich kann dabei fortlaufend während der Bedienung bestimmt werden. Unter fortlaufend wird auch ein periodisches Bestimmen mit einem ausreichend geringen Zeitabstand verstanden.

Weiterhin umfasst die Warnvorrichtung eine Umgebungsüberwachungseinheit, die ausgebildet ist, um eine Umgebung um das Fahrzeug herum zumindest teilweise zu überwachen. Bevorzugt ist die Umgebungsüberwachungseinheit so ausgebildet, dass sie die Umgebung um das Fahrzeug herum vollständig überwacht. Die Umgebungsüberwachungseinheit kann dazu eine oder mehrere aus dem Stand der Technik bekannte Methoden einsetzen. Die Umgebungsüberwachungseinheit kann dazu ein oder mehrere Erfassungselemente bzw. Sensoren aufweisen. Beispiele sind ein Radar-Erfassungselement, ein Lidar-Erfassungselement, ein Bilderfassungselement, wie etwa eine Kamera, ein Ultraschall-Erfassungselement und ein Infrarot-Erfassungselement. Das oder die Erfassungselemente der Umgebungsüberwachungseinheit weisen jeweils einen Erfassungsbereich mit einer charakteristischen horizontalen und vertikalen Ausdehnung auf. Es ist auch denkbar, dass die Umgebungsüberwachungseinheit eine Kombination der genannten Typen von Erfassungselementen umfasst. Weiterhin können die Erfassungselemente in Abhängigkeit eines Typs des Fahrzeugs an dem Fahrzeug, d.h. an einer Außenseite des Fahrzeugs, angeordnet oder in diesem, z.B. in eine Karosserie des Fahrzeugs, integriert sein.

Weiterhin ist die Umgebungsüberwachungseinheit ausgebildet, eine Kollisionsgefahr für ein Objekt, das in der überwachten Umgebung vorhanden ist, zu bestimmen. Die Umgebungsüberwachungseinheit kann dazu ein oder mehrere Objekte anhand der von dem oder den Erfassungselement(en) bereitgestellten Informationen erfassen und lokalisieren, d.h. die relative Position des Objekts zum Fahrzeug bestimmen. Dabei können Informationen von unterschiedlichen Erfassungselementen fusioniert werden, um das Objekt zu erfassen. Das Objekt muss dabei nicht zwangsläufig einem Lebewesen oder einem Gegenstand entsprechen. Das Objekt muss dabei auch nicht als ein Objekttyp klassifiziert werden. Eine Klassifizierung des Objekts, z.B. mittels maschinellem Sehen, ist aber denkbar. Dabei kann auch eine fortlaufende Erfassung eines oder mehrerer Objekte erfolgen. Es kann auch eine Objektverfolgung (sog. Objekttracking) in der Überwachungseinheit implementiert sein.

Die Umgebungsüberwachungseinheit ist ausgebildet, nach einer Erfassung des Objekts zu bestimmen, ob eine Kollisionsgefahr mit dem Objekt besteht. Die Kollisionsgefahr mit dem Objekt kann dabei anhand unterschiedlicher Bedingungen und/oder Eigenschaften des Objekts und/oder des Fahrzeugs, die nachfolgend noch beschrieben werden, bestimmt werden. Die Kollisionsgefahr kann dabei auch als eine Kollisionswahrscheinlichkeit bezeichnet werden. Falls mehrere Objekte in der überwachten Umgebung des Fahrzeugs vorhanden sind, kann selbstverständlich eine jeweilige Bestimmung der Kollisionsgefahr für die mehreren Objekte erfolgen. Dabei kann die Bestimmung der Kollisionsgefahr fortlaufend, insbesondere periodisch, erfolgen.

Ferner ist die Umgebungsüberwachungseinheit ausgebildet, ein Objekt, für das eine Kollisionsgefahr besteht und das außerhalb des Aufmerksamkeitsbereichs vorhanden ist, als das Kollisionsobjekt zu erfassen. Das bedeutet, das Kollisionsobjekt ist außerhalb des Aufmerksamkeitsbereichs des Bedieners vorhanden. Die Umgebungsüberwachungseinheit erhält dazu den Aufmerksamkeitsbereich von der Aufmerksamkeitsbereich-Bestimmungseinheit und bestimmt dann, ob das Objekt, für das eine Kollisionsgefahr besteht, in dem erhaltenen Aufmerksamkeitsbereich vorhanden ist. Nur in dem Fall, in dem das Objekt, für das eine Kollisionsgefahr besteht, außerhalb des Aufmerksamkeitsbereichs vorhanden ist, wird dieses Objekt auch als ein Kollisionsobjekt bestimmt. Diese Bestimmung des Objekts als Kollisionsobjekt kann dabei ebenfalls fortlaufend erfolgen, um einer Verlagerung des Aufmerksamkeitsbereichs des Bedieners und/oder einer Änderung einer relativen Position zwischen Fahrzeug und Objekt Rechnung zu tragen. Beispielsweise kann ein Objekt, für das eine Kollisionsgefahr besteht, zunächst außerhalb des Aufmerksamkeitsbereichs vorhanden sein und somit als Kollisionsobjekt erfasst werden. Der Bediener kann jedoch sein Gesichtsfeld und somit den Aufmerksamkeitsbereich auf das Objekt richten. Für das Objekt ist dann zwar immer noch eine Kollisionsgefahr vorhanden, es wird aber nicht länger als Kollisionsobjekt erfasst.

Die Überwachungseinheit umfasst ferner eine Ausgabeeinheit, die ausgebildet ist, um ein Warnsignal beim Erfassen des Kollisionsobjekts auszugeben. Das heißt, die Ausgabeeinheit gibt das Warnsignal nur aus, wenn das Kollisionsobjekt erfasst wurde. Das heißt, die Ausgabe des Warnsignals gibt an, dass ein Objekt, für das eine Kollisionsgefahr besteht, außerhalb des Aufmerksamkeitsbereichs vorhanden ist. Befindet sich das Objekt, für das eine Kollisionsgefahr besteht, in dem Aufmerksamkeitsbereich, wird es folglich nicht als Kollisionsobjekt erfasst und die Ausgabeeinheit gibt kein Warnsignal aus. Auf diese Weise kann der Bediener vor dem Kollisionsobjekt zuverlässig gewarnt werden. Andererseits wird die Ausgabe des Warnsignals für Objekte, für die zwar eine Kollisionsgefahr besteht, die aber im Aufmerksamkeitsbereich vorhanden sind, so dass von einer Wahrnehmung durch den Bediener ausgegangen werden kann, unterbunden. Demzufolge wird eine mögliche Belästigung des Bedieners während der Bedienung des Fahrzeugs vermieden.

Die Ausgabeeinheit kann insbesondere ausgebildet sein, um ein optisches und/oder ein akustisches und/oder ein haptisches Warnsignal auszugeben. Das heißt, die Ausgabeeinheit kann ein optisches Warnsignal oder ein akustisches Warnsignal oder ein haptisches Warnsignal ausgeben. Die Ausgabeeinheit kann auch eine Kombination von mindestens zwei dieser Signale ausgeben. Demzufolge kann der Bediener wirksam vor dem Kollisionsobjekt gewarnt werden, da das Warnsignal über unterschiedliche Sinnesorgane wahrnehmbar ist. Das Warnsignal kann individuell angepasst werden. Auf diese Weise können Umgebungsbedingungen, die während der Bedienung des Fahrzeugs auftreten, berücksichtigt werden. Beispielsweise kann in einer lauten Umgebung, wie etwa auf einer Baustelle, eine Kombination aus einem optischen Warnsignal und einem haptischen Warnsignal ausgegeben werden. Ferner kann auch eine Art der unterschiedlichen Warnsignale angepasst werden. Beispielsweise können eine Lautstärke und ein Ton des akustischen Warnsignals, ein Vibrationsmuster und eine Vibrationsstärke des haptischen Signals, sowie eine Helligkeit und eine Darstellung des optischen Warnsignals eingestellt werden. Auf diese Weise ist eine Anpassung an eine Präferenz des Bedieners möglich.

Gemäß einem Aspekt kann die Umgebungsüberwachungseinheit ausgebildet sein, um die Kollisionsgefahr für ein Objekt in Abhängigkeit eines Abstands zwischen dem Fahrzeug und dem Objekt zu bestimmen. Alternativ oder zusätzlich kann die Umgebungsüberwachungseinheit ausgebildet sein, um die Kollisionsgefahr in Anhängigkeit einer relativen Geschwindigkeit zwischen dem Fahrzeug und dem Objekt zu bestimmen. Beispielsweise wird eine Kollisionsgefahr für ein Objekt angenommen, das innerhalb eines vorgegebenen Abstands zu dem Fahrzeug vorhanden ist. Es kann auch eine Kollisionsgefahr angenommen werden, wenn sich das Objekt und das Fahrzeug mit einer vorgegeben relativen Geschwindigkeit oder schneller aufeinander zu bewegen. Die Aspekte des Abstands und der relativen Geschwindigkeit können auch miteinander kombiniert werden. Eine Kollisionsgefahr kann angenommen werden, wenn sich das Objekt innerhalb des vorgegeben Abstands zu dem Fahrzeug befindet und/oder sich mit der vorgegebenen Geschwindigkeit oder schneller auf das Fahrzeug zu bewegt. Auf diese Weise kann eine Kollisionsgefahr und somit auch das Kollisionsobjekt auf einfache, aber wirkungsvolle Weise bestimmt werden. Dabei ist es denkbar, dass der vorgegebene Abstand und/oder die vorgegebene relative Geschwindigkeit über den überwachten Bereich gleich festgelegt sind. Es ist aber auch möglich, dass unterschiedliche Werte für den vorgegebenen Abstand und/oder die vorgegebene relative Geschwindigkeit über den überwachten Bereich festgelegt sind. Die unterschiedlichen Werte für den vorgegebenen Abstand und/oder die vorgegebene relative Geschwindigkeit können einen kontinuierlichen oder einen diskreten Übergang aufweisen.

Gemäß einem weiteren Aspekt kann die Umgebungsüberwachungseinheit ausgebildet sein, um die Kollisionsgefahr für ein Objekt in Abhängigkeit eines Typs des Fahrzeugs zu bestimmen. Beispielsweise haben Fahrzeuge, die in einem stationären Zustand arbeiten, eine geringere Kollisionsgefahr mit einem Objekt als Fahrzeuge, die bei der Bedienung bewegt, d.h. gefahren, werden. Dieser Einfluss kann beispielsweise bei der Festlegung des vorgegebenen Abstands, innerhalb dessen eine Kollisionsgefahr besteht, berücksichtigt werden. Weiterhin kann der Wert der vorgegebenen relativen Geschwindigkeit entsprechend festgelegt werden. Ferner können Komponenten des Fahrzeugs, die von dem Fahrzeug auskragen, bei der Bestimmung der Kollisionsgefahr berücksichtigt werden. Alternativ oder zusätzlich kann die Umgebungsüberwachungseinheit ausgebildet sein, um die Kollisionsgefahr für ein Objekt in Abhängigkeit des Einsatzzwecks des Fahrzeugs zu bestimmen. Beispielweise kann ein Bagger zum stationären Ausheben einer Grube, aber auch zum Bewegen von schweren Gegenständen von einem Ort zu einem anderen verwendet werden. Im ersten Fall besteht für Objekte mit einem vergleichsweise geringen Abstand zum dem Fahrzeug eine Kollisionsgefahr, wohingegen im zweiten Fall auch für Objekte, die weiter von dem Fahrzeug entfernt sind, aufgrund der Bewegung des Baggers eine Kollisionsgefahr bestehen kann. Dem unterschiedlichen Einsatzzweck kann beispielsweise durch entsprechende Anpassung des vorgegebenen Abstands und/oder der vorgegebenen relativen Geschwindigkeit Rechnung getragen werden. Demzufolge kann die Kollisionsgefahr entsprechend dem Fahrzeugtyp und/oder dem jeweiligen Einsatzzweck angemessen bestimmt werden.

Die Umgebungsüberwachungseinheit kann ausgebildet sein, die Kollisionsgefahr für ein Objekt in Abhängigkeit einer Bedienung des Fahrzeugs zu bestimmen. Beispielsweise kann ein Bediensignals, das mittels eines Bedienelements des Fahrzeugs, wie etwa eines Bedienhebels oder eines Gaspedals, eingegeben wird, durch die Umgebungsüberwachungseinheit erlangt bzw. abgegriffen werden. Weiterhin kann die Umgebungsüberwachungseinheit ein Muster einer Bedienung ermitteln und bei der Bestimmung der Kollisionsgefahr berücksichtigen. Zum Beispiel kann bestimmt werden, dass ein Bagger eine Grube in einer Richtung aushebt und den Aushub durch Drehen des Baggers um einen vorgegebenen Winkel ablädt. Demzufolge ist davon auszugehen, dass eine Aufmerksamkeit des Bedieners während einer Bedienung auf einen Bereich eines Baggerarms und/oder einer Baggerschaufel gerichtet ist. Während der Drehung schwenkt jedoch auch ein hinteres Ende eines Oberwagens hin und her, so dass in diesem Bereich eine Kollisionsgefahr erhöht ist. Dem kann durch Festlegen des vorgegebenen Abstands, innerhalb dessen eine Kollisionsgefahr mit einem Objekt besteht, Rechnung getragen werden. Insbesondere wird der vorgegebene Abstand um das hintere Ende des Oberwagens vergrößert, um eine Kollisionsgefahr frühzeitig zu bestimmen und das Warnsignal rechtzeitig auszugeben, falls ein Objekt, für das die Kollisionsgefahr besteht, außerhalb des Aufmerksamkeitsbereichs vorhanden ist. Auf diese Weise kann eine angemessene Warnung des Bedieners des Fahrzeugs erfolgen. Mit Vorteil wird der vorgegebene Abstand nur in dem Bereich des vorgegebenen Winkels, in dem das hintere Ende des Oberwagens des Baggers hin- und herschwenkt, erhöht.

Die Ausgabeeinheit kann mindestens ein optisches Anzeigeelement aufweisen. Das optische Anzeigeelement ist bevorzugt in einem typischen Aufmerksamkeitsbereich angeordnet. Der typische Aufmerksamkeitsbereich ist ein Bereich, auf den die Aufmerksamkeit des Bedieners während einer Bedienung des Fahrzeugs die meiste Zeit gerichtet ist. Beispielsweise ist die Aufmerksamkeit eines Bedieners bei einem Bagger meist auf die Baggerschaufel gerichtet, so dass das optische Anzeigeelement in einer Sichtlinie von dem Bediener zu der Baggerschaufel oder in der Nähe davon angeordnet ist. Das optische Anzeigeelement kann dabei ein Display, der auch als Touch-Display ausgebildet sein kann, aufweisen. Das Display kann auch für andere Anzeigen außer der Ausgabe des optischen Warnsignals verwendet werden. Weiterhin ist auch eine Signalleuchte, wie etwa eine LED-Leuchte, denkbar. Es ist auch möglich, dass mehrere optische Anzeigeelemente vorhanden sind. Beispielsweise können ein Display und mehrere Signalleuchten vorgesehen sein. Bevorzugt ist dann eines dieser optischen Anzeigeelemente, besonders bevorzugt das Display, in dem für das Fahrzeug typischen Aufmerksamkeitsbereich angeordnet. Eine Verarbeitung zum Ausgeben des optischen Warnsignals kann dabei in einer Steuereinheit der Warnvorrichtung oder in dem optischen Anzeigeelement selbst erfolgen.

Die Ausgabeeinheit und das optische Anzeigeelement können ausgebildet sein, um auf dem optischen Anzeigeelement eine Richtung, in der das Kollisionsobjekt vorhanden ist, anzuzeigen. Die Anzeige der Richtung kann dabei durch das Anzeigeelement selbst erfolgen. Beispielsweise kann auf dem Display ein Pfeil, der in die Richtung, in der das Kollisionsobjekt vorhanden ist, angezeigt werden. Der Pfeil kann dabei überlagert, d.h. in Form eines Overlays, angezeigt werden. Alternativ oder zusätzlich kann eine Ausgabe der Richtung auch durch die Ansteuerung eines optischen Anzeigeelements, das in der Richtung, in der das Kollisionsobjekt vorhanden ist, erfolgen. Beispielsweise kann eine Signalleuchte gezielt angesteuert werden.

Wie oben beschrieben, kann die Umgebungsüberwachungseinheit ein Bilderfassungselement, wie etwa eine Kamera, aufweisen. Die Anzeigeeinheit und das optische Anzeigeelement können ausgebildet sein, um ein vom dem Bildererfassungselement erfasstes Bild auf dem optischen Anzeigeelement anzuzeigen oder zu überlagern. Beispielsweise kann das optische Anzeigeelement ein Display sein. Das erfasste Bild kann dabei in eine bereits auf dem Display angezeigte Anzeige integriert oder dieser überlagert werden. Das Kollisionsobjekt kann in dem auf dem optischen Anzeigeelement dargestellten Bild hervorgehoben, z.B. farbig umrandet oder blinkend, dargestellt sein. Auf diese Weise kann der Bediener das Kollisionsobjekt schnell erfassen.

Die Ausgabeeinheit kann mehrere optische Anzeigeelemente aufweisen und ausgebildet sein, das Warnsignal über das optische Anzeigeelement auszugeben, das in dem Aufmerksamkeitsbereich des Bedieners vorhanden ist oder diesem am nächsten ist. Beispielsweise können mehrere Displays oder Signalleuchten vorhanden sein. Die Ausgabeeinheit erhält von der Aufmerksamkeits-Bestimmungseinheit einen Aufmerksamkeitsbereich und bestimmt dann, welches oder welche der optischen Anzeigeelemente in dem Aufmerksamkeitsbereich vorhanden sind. Anschließend wird das optische Warnsignal auf dem optischen Anzeigeelement bzw. den optischen Anzeigeelementen angezeigt, die sich im Aufmerksamkeitsbereich befinden. Für den Fall, dass keines der optischen Anzeigeelemente in dem Aufmerksamkeitsbereich vorhanden ist, kann das optisches Anzeigeelement angesteuert werden, das dem Aufmerksamkeitsbereich am nächsten ist, d.h. das die geringste Distanz zu dem Aufmerksamkeitsbereich aufweist. Somit kann erreicht werden, dass der Bediener die Ausgabe des optischen Warnsignals zumindest durch peripheres Sehen wahrnimmt.

Die Ausgabeeinheit kann mindestens ein haptisches Ausgabeelement aufweisen, das in oder an einer mit dem Bediener in direktem Kontakt stehenden Fahrzeugkomponente angeordnet ist. Das haptische Ausgabeelement kann bevorzugt ein Vibrationselement sein. Die Fahrzeugkomponente kann ein Sitz oder ein Bedienelement, wie etwa ein Bedienhebel oder ein Lenkrad, des Fahrzeugs sein. Durch die Ausgabe des haptischen Warnsignals durch das haptische Ausgabeelement kann der Bediener auch in einer lauten Umgebung zuverlässig vor dem Kollisionsobjekt gewarnt werden.

Insbesondere kann die Ausgabeeinheit mehrere haptische Ausgabeelemente, die in/an einer oder mehreren mit dem Bediener in direktem Kontakt stehenden Komponente(n) angeordnet sind, aufweisen. Die mehreren haptischen Ausgabeelemente können auch dadurch gebildet sein, das Bereiche eines haptischen Ausgabeelements unabhängig voneinander ansteuerbar sind. Die Ausgabeeinheit kann in diesem Fall ausgebildet sein, um die haptischen Ausgabeelemente entsprechend einer Richtung, in der das Kollisionsobjekt vorhanden ist, anzusteuern. Beispielsweise kann das Fahrzeug, wie etwa bei Baggern üblich, mehrere Bedienelemente, z.B. zwei Bedienhebel, in denen jeweils ein haptisches Ausgabeelement angeordnet ist, aufweisen. Die Ausgabeeinheit steuert dann dasjenige haptische Ausgabeelement an, in dessen Richtung das Kollisionsobjekt vorhanden ist. Somit kann die Aufmerksamkeit des Bedieners zuverlässig in die Richtung, in der das Kollisionsobjekt vorhanden ist, gerichtet werden.

Die Ausgabeeinheit kann mindestens einen Lautsprecher oder einen Kopfhörer aufweisen. Als Kopfhörer sind beispielsweise In-Ear-Kopfhörer, Half-In-Ear-Kopfhörer, On-Ear-Kopfhörer, Over-Ear-Kopfhörer, Kopflautsprecher oder Knochenschall-Hörer zu verstehen. Der Kopfhörer kann dabei auch als Gehörschutz oder als Bestandteil eines Funkgeräts ausgebildet sein. Demzufolge kann dem Bediener das akustisches Warnsignal ausgegeben werden. Kopfhörer bieten den Vorteil, dass der Bediener das Warnsignal auch in einer lauten Umgebung zuverlässig wahrnehmen kann.

Die Ausgabeeinheit kann insbesondere mehrere Lautsprecher aufweisen. Die mehreren Lautsprecher können dabei in unterschiedlichen Richtungen um den Bediener herum angeordnet sein, so dass sie eine richtungsgebundene Ausgabe des Warnsignals ermöglichen. Alternativ kann der Kopfhörer für eine räumliche Audioausgabe ausgebildet sein. Die Ausgabeeinheit kann dann ausgebildet sein, um das akustische Signal entsprechend einer Richtung, in der das Kollisionsobjekt vorhanden ist, auszugeben. Bei Verwendung eines Kopfhörers kann eine Drehung eines Kopfes des Bedieners berücksichtigt werden, um die Richtung korrekt anzugeben. Die Drehung des Kopfes kann durch den Kopfhörer selbst und/oder durch die Aufmerksamkeitsbereich-Bestimmungseinheit erfasst werden. Demzufolge kann dem Bediener die Richtung, in der das Kollisionsobjekt vorhanden ist, unter Verwendung des akustischen Warnsignals angezeigt werden. Der Bediener kann das Kollisionsobjekt dann zügig erfassen.

Weiterhin kann die Warnvorrichtung eine Eingabeeinheit umfassen, die ausgebildet ist, um eine Eingabe zum Quittieren des Kollisionsobjekts zu empfangen. Demzufolge kann der Bediener bestätigen, dass er das Kollisionsobjekt wahrgenommen hat und bei der Bedienung des Fahrzeugs berücksichtigen wird. Demzufolge kann eine Beeinträchtigung des Bedieners durch die andauernde Ausgabe des Warnsignals vermieden werden. Weiterhin kann die Eingabeeinheit ausgebildet sein, eine Eingabe zum Initialisieren einer Umgebung, in der ein Einsatz des Fahrzeugs erfolgen soll, zu empfangen. Beispielsweise erfolgt ein Einsatz eines Baggers auf einer engen Baustelle, in der mehrere Objekte ein Kollisionsobjekt darstellen. Dem ist sich der Bediener jedoch bewusst und er würde durch die Ausgabe des Warnsignals unnötig bei der Bedienung gestört werden. In diesem Fall kann er der Warnvorrichtung bestätigen, dass er die Kollisionsobjekte bei der Bedienung berücksichtigen wird. Folglich werden die vorhandenen Kollisionsobjekte quittiert und nicht länger als Kollisionsobjekte erfasst. Taucht jedoch ein neues Kollisionsobjekt auf, wird der Bediener zuverlässig vor diesem durch Ausgabe des Warnsignals gewarnt. Die Eingabeeinheit kann dabei durch ein dediziertes Eingabeelement, wie etwa eine Eingabetaste, gebildet sein. Alternativ oder zusätzlich kann die Eingabeeinheit auch durch eine entsprechende Anzeige auf einem Touch-Display, der bevorzugt auch das optische Anzeigeelement bildet, gebildet sein.

Die Ausgabeeinheit kann ausgebildet sein, das Warnsignal entsprechend der Kollisionsgefahr anzupassen und auszugeben. Demzufolge können das optische und/oder das haptische und/oder das akustisches Warnsignal entsprechend einer sich ändernden Kollisionsgefahr angepasst werden. Beispielsweise kann das Warnsignal geändert werden, wenn sich das Fahrzeug und das Kollisionsobjekt aufeinander zu bewegen, so dass eine Kollision wahrscheinlicher wird. Beispielsweise kann eine hellere optische Anzeige verwendet werden. Es kann auch eine andere Farbe, z.B. eine Signalfarbe, für die optische Anzeige verwendet werden. Im Falle einer blinkenden Anzeige kann eine Blinkfrequenz angepasst werden. Weiterhin können eine Lautstärke und/oder ein Ton und/oder eine Ausgabefrequenz des akustischen Warnsignals angepasst werden. Zudem kann eine Stärke und/oder ein Vibrationsmuster des haptischen Warnsignals angepasst werden. Auf diese Weise wird der Bediener zuverlässig vor einer zunehmenden Kollisionsgefahr gewarnt.

Weiterhin kann die Warnvorrichtung eine Stoppeinheit umfassen, die ausgebildet ist, eine Bedienung des Fahrzeugs bei einer drohenden Kollision mit dem Kollisionsobjekt zu stoppen. Das bedeutet, die Umgebungsüberwachungseinheit hat ein Kollisionsobjekt erfasst und der Bediener ist gerade dabei, eine Kollision des Fahrzeugs mit dem Kollisionsobjekt durch eine Bedienung herbeizuführen. Beispielsweise kann der Bediener eine Drehbewegung des Baggers vornehmen, bei der der Baggerarm oder ein hinters Ende eines Oberwagens mit dem Kollisionsobjekt kollidieren würde. Die Stoppeinheit kann dies dadurch erkennen, da das Kollisionsobjekt innerhalb eines Schwenkradius vorhanden ist. In diesem Fall unterbricht die Stoppeinheit die Bedienung des Fahrzeugs, so dass eine Kollision mit dem Kollisionsobjekt vermieden wird. Die Stoppeinheit kann dabei gebildet werden, dass die Überwachungsvorrichtung das Warnsignal einer anderen Steuereinheit des Fahrzeugs über ein Fahrzeugnetzwerk (z.B. CAN-Netzwerk) bereitstellt und das Warnsignal durch die andere Steuereinheit entsprechend verarbeitet wird, um die Bedienung zu stoppen.

Darüber hinaus kann die vorliegende Offenbarung auch als ein Fahrzeug, das eine Warnvorrichtung gemäß den oben beschriebenen Aspekten aufweist, ausgeführt sein.

Nachfolgend werden Ausführungsformen der vorliegenden Offenbarung unter Bezugnahme auf die Figuren beschrieben. In den Figuren sind gleichen oder sich entsprechenden Elementen dasselbe Bezugszeichen zugewiesen. Es zeigen:
Fig. 1 ein schematisches Blockschaltbild einer offenbarungsgemäßen Warnvorrichtung;
Fig. 2 eine schematische Seitenansicht eines Baggers, in dem die offenbarungsgemäße Warnvorrichtung installiert ist;
Fig. 3 eine schematische Draufsicht auf den Bagger;
Fig. 4 eine schematische Draufsicht auf eine Kabine des Baggers;
Fig. 5 eine schematische Ansicht eines Displays, das in der Kabine des Baggers installiert ist;
Fig. 6 eine schematische Draufsicht auf den Bagger während einer Drehbewegung eines Oberwagens des Baggers;
Fig. 7 eine schematische Draufsicht auf die Kabine des Baggers während der Drehbewegung;
Fig. 8 eine schematische Draufsicht auf den Bagger während einer Fahrt des Baggers mit gedrehtem Oberwagen; und
Fig. 9 eine schematische Draufsicht auf die Kabine des Baggers während der Fahrt des Baggers.

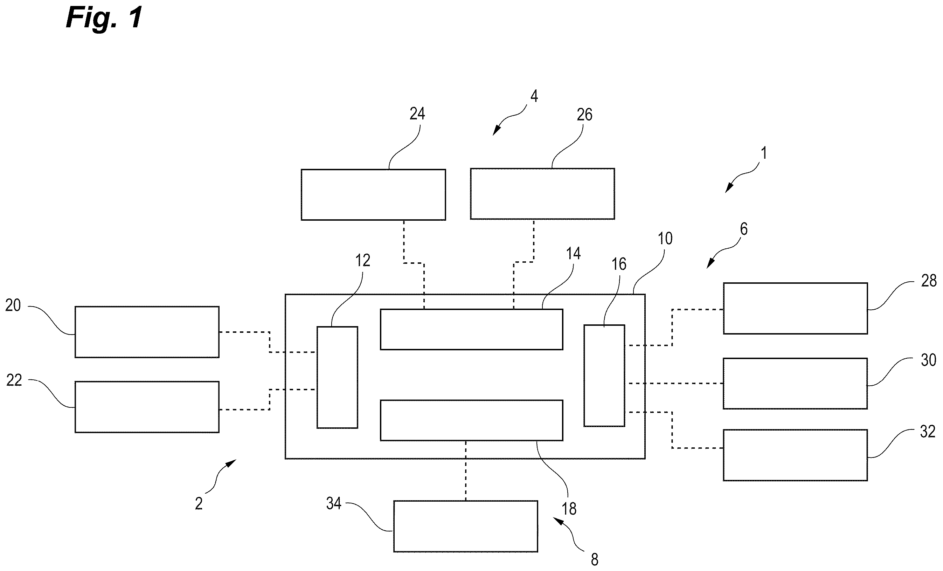

Fig. 1 zeigt ein schematisches Blockschaltbild einer offenbarungsgemäßen Warnvorrichtung 1, die eine Aufmerksamkeitsbereich-Bestimmungseinheit 2, eine Umgebungsüberwachungseinheit 4, eine Ausgabeeinheit 6 und eine Eingabeeinheit 7 aufweist. Weiterhin weist die Warnvorrichtung 1 eine Steuereinheit 10 auf, die eine CPU, einen Speicher zum Speichern eines Computerprogramms, das durch die CPU ausführbar ist, und Eingabe-/Ausgabe-Schnittstellen aufweist. In der CPU werden durch Ausführen des Computerprogramms ein Aufmerksamkeitsbereich-Bestimmungsabschnitt 12, ein Umgebungsüberwachungsabschnitt 14, ein Ausgabeabschnitt 16 und ein Eingabeabschnitt 18 als Funktionsabschnitte gebildet. Die Funktionsabschnitte 12 bis 18 wirken über die Eingabe-/Ausgabe-Schnittstellen mit externen Komponenten zusammen, um die jeweiligen Einheiten 2 bis 8 zu bilden. Weiterhin sind die Funktionsabschnitte imstande, Informationen bzw. Daten untereinander auszutauschen.

Die Aufmerksamkeits-Bestimmungseinheit 2 umfasst den Aufmerksamkeits-Bestimmungsabschnitt 12, eine Bediener-Kamera 20 und einen Haltungssensor 22. Die Bediener-Kamera 20 erfasst einen Kopf eines Bedieners eines Fahrzeugs, in dem die Warnvorrichtung 1 installiert ist. In dem Aufmerksamkeits-Bestimmungsbereich 12 ist ein Algorithmus zum Verfolgen bzw. Tracken eines Gesichts und/oder von Augen des Bedieners implementiert, um ein Gesichtsfeld, insbesondere ein binokulares Gesichtsfeld, des Bedieners zu bestimmen. Hierzu können aus dem Stand der Technik bekannte Methoden verwendet werden. In einem Sitz des Fahrzeugs ist ein Neigungssensor als ein Haltungssensor 22 installiert, so dass zusätzlich eine Neigung des Sitzes zur Bestimmung des Gesichtsfelds des Bedieners herangezogen werden kann. Auf diese Weise kann das Gesichtsfeld als ein Aufmerksamkeitsbereich, auf den eine Aufmerksamkeit des Bedieners gerichtet ist, in- und außerhalb des Fahrzeugs, d.h. einer Kabine des Fahrzeugs, bestimmt werden. Für die Bestimmung des Aufmerksamkeitsbereichs können Größen für ein übliches Gesichtsfeld eines Menschen herangezogen werden. Beispielsweise kann ein Mensch in der Horizontalen einen Bereich von etwa 210° erfassen. In der Vertikalen beträgt der Bereich zwischen 60° und 70° nach oben und zwischen 70° und 80° nach unten. Von den angegebenen Bereichen kann noch ein Sicherheitsbereich, z.B. 10°, abgezogen werden, um eine sichere Festlegung des Gesichtsfelds und somit des Aufmerksamkeitsbereichs zu ermöglichen.

Die Umgebungsüberwachungseinheit 4 umfasst den Umgebungsüberwachungsabschnitt 14 sowie mindestens eine Kamera 24 als Bilderfassungselement und mindestens einen Lidar-Sensor 26. Die Kamera 24 und der Lidar-Sensor 26 entsprechen somit Erfassungselementen und erfassen zumindest teilweise eine Umgebung um das Fahrzeug herum. Der Bereich, in dem die Umgebung überwacht wird, d.h. die überwachte Umgebung, hängt dabei von einem Erfassungsbereich der Kamera 24 und des Lidar-Sensors 26 ab. Jedes Erfassungselement weist dabei einen Erfassungsbereich mit einer charakteristischen horizontalen und vertikalen Erstreckung auf. Die Kamera 24 und der Lidar-Sensor 26 können unterschiedliche Erfassungsbereiche aufweisen und eine Überwachung der Umgebung kann nur innerhalb eines Überlappungsbereichs erfolgen. Die überwachte Umgebung kann durch die Installation zusätzlicher Kameras 24 und Lidar-Sensoren 26 vergrößert werden. Besonders bevorzugt wird eine Umgebung um das Fahrzeug herum vollständig überwacht. Weiterhin können die Erfassungselemente in Bezug auf eine horizontale Ebene, in der sie installiert sind, geneigt sein, um einen Bereich unterhalb oder oberhalb des Fahrzeugs zu erfassen.

Der Umgebungsüberwachungsabschnitt 14 erlangt die von der Kamera 24 und dem Lidar-Sensor 26 erfassten Informationen und fusioniert diese, um ein oder mehrere Objekte um das Fahrzeug herum zu erfassen. Hierzu können beispielsweise Methoden des maschinellen Sehens verwendet werden.

Weiterhin bestimmt der Umgebungsüberwachungsabschnitt 14 eine Kollisionsgefahr bzw. eine Kollisionswahrscheinlichkeit für ein erfasstes Objekt. Beispielsweise kann eine Kollisionsgefahr für ein Objekt angenommen werden, wenn das Objekt innerhalb eines vorgegebenen Abstands von dem Fahrzeug vorhanden ist. Alternativ oder zusätzlich kann eine Kollisionsgefahr angenommen werden, wenn sich das Fahrzeug und das Objekt mit einer relativen Geschwindigkeit aufeinander zu bewegen, die größer gleich einer vorgegebenen relativen Geschwindigkeit ist. Der vorgegebene Abstand und/oder die vorgegebene relative Geschwindigkeit können in Abhängigkeit eines Typs des Fahrzeugs und/oder eines Einsatzzwecks des Fahrzeugs festgelegt sein. Weiterhin können der vorgegebene Abstand und/oder die vorgegebene relative Geschwindigkeit in Abhängigkeit einer Bedienung des Fahrzeugs festgelegt sein. Der vorgegebene Abstand und/oder die relative Geschwindigkeit können jeweils auf einen gleichen Wert entlang der überwachten Umgebung festgelegt sein. Es können aber auch jeweils unterschiedliche Werte festgelegt sein, die einen kontinuierlichen oder einen diskreten Übergang aufweisen.

Falls ein Objekt, für das eine Kollisionsgefahr besteht, in der überwachten Umgebung vorhanden ist, bestimmt der Umgebungsüberwachungsabschnitt 14, ob das Objekt in dem Aufmerksamkeitsbereich vorhanden ist oder nicht. Hierzu erlangt der Umgebungsüberwachungsabschnitt 14 eine Information über den gegenwärtigen Aufmerksamkeitsbereich von dem Aufmerksamkeitsbereich-Bestimmungsabschnitt 12. Falls für ein Objekt eine Kollisionsgefahr besteht und es außerhalb des Aufmerksamkeitsbereichs vorhanden ist, wird es als ein Kollisionsobjekt erfasst.

Die Ausgabeeinheit 6 weist den Ausgabeabschnitt 16, mindestens ein Display 28 als optisches Ausgabeelement, mindestens einen Lautsprecher 30 als akustisches Ausgabeelement und mindestens ein Vibrationselement 32 als haptisches Ausgabeelement auf. Der Ausgabeabschnitt 16 erhält von dem Umgebungsüberwachungsabschnitt 14 die Information, dass ein Kollisionsobjekt erfasst wurde und veranlasst anschließend eine Ausgabe eines Warnsignals über das Display 28, den Lautsprecher 30 und/oder das Vibrationselement 32. Dabei kann das Warnsignal vorgehend konfiguriert sein. Das Warnsignal kann zudem entsprechend einer Kollisionsgefahr angepasst werden. Beispielswese kann das Warnsignal mit einer höheren Intensität ausgegeben werden, wenn das Kollisionsobjekt einen geringeren Abstand zum Fahrzeug aufweist.

Die Eingabeeinheit 8 wird durch den Eingabeabschnitt 18 und mindestens eine Eingabetaste 34 gebildet. Der Eingabeabschnitt 18 empfängt eine Information über eine Betätigung der Eingabetaste 34 als eine Eingabe zum Quittieren des Kollisionsobjekts. Das bedeutet, durch die Eingabe signalisiert der Bediener, dass er das Kollisionsobjekt wahrgenommen hat und bei der Bedienung des Fahrzeugs berücksichtigen wird. Bevorzugt kann dabei das Display 28 der Ausgabeeinheit 6 als Touch-Display ausgebildet sein und die Eingabetaste 34 kann als Teil einer Touchfunktion auf dem Display 28 angezeigt werden. Alternativ kann die Eingabetaste 34 durch eine haptische Taste gebildet sein, die an dem Display 28, einem Dashboard, einem Lenkrad und/oder einem Bedienhebel 54 angebracht oder darin integriert ist. Beispielsweise kann das Kollisionsobjekt mittels eines durch die Kamera 24 erfassten Bilds auf dem Display 28 angezeigt und durch Berühren auf dem Display 28 quittiert werden. Alternativ oder zusätzlich kann der Eingabeabschnitt 18 durch Betätigung der Eingabetaste 34 eine Eingabe zum Initialisieren einer Umgebung, in der ein Einsatz des Fahrzeugs erfolgen soll, empfangen. Durch die Initialisierung werden sämtliche Kollisionsobjekte in der Umgebung um das Fahrzeug herum quittiert. Auf diese Weise kann in einer engen Umgebung, wie etwa auf einer Baustelle, eine störende Aufgabe des Warnsignals unterbunden werden, während der Bediener zuverlässig vor einem neuen Kollisionsobjekt gewarnt wird.

Weiterhin kann die Warnvorrichtung 1 eine nicht gezeigte Stoppeinheit, die einen Stoppabschnitt und einen Stoppaktor aufweist, aufweisen. Der Stoppabschnitt erlangt ein Bediensignal zum Bedienen des Fahrzeugs, zum Beispiel ein Signal von einem Bedienhebel oder einem Gaspedal, und bestimmt bei Erfassen eines Kollisionsobjekts, ob eine Kollision mit dem Kollisionsobjekt bei der Bedienung des Fahrzeugs mit dem erfassten Bediensignal erfolgen würde. Trifft dies zu, betätigt der Stoppabschnitt den Stoppaktor, um die gegenwärtige Bedienung, die durch das Bediensignal veranlasst wird, zu stoppen. Der Stoppaktor kann dabei einer anderen Steuereinheit, die für die Bedienung des Fahrzeugs verantwortlich ist, entsprechen. Um den Stoppvorgang auszulösen sendet der Stoppabschnitt das Warnsignal über ein Fahrzeugnetzwerk (z.B. CAN-Netzwerk) an die andere Steuereinheit, die das Warnsignal entsprechend verarbeitet und ein Stoppen der Bedienung ausführt. Auf diese Weise kann eine Kollision mit dem Kollisionsobjekt aufgrund einer Bedienung des Fahrzeugs durch den Bediener unterbunden werden.

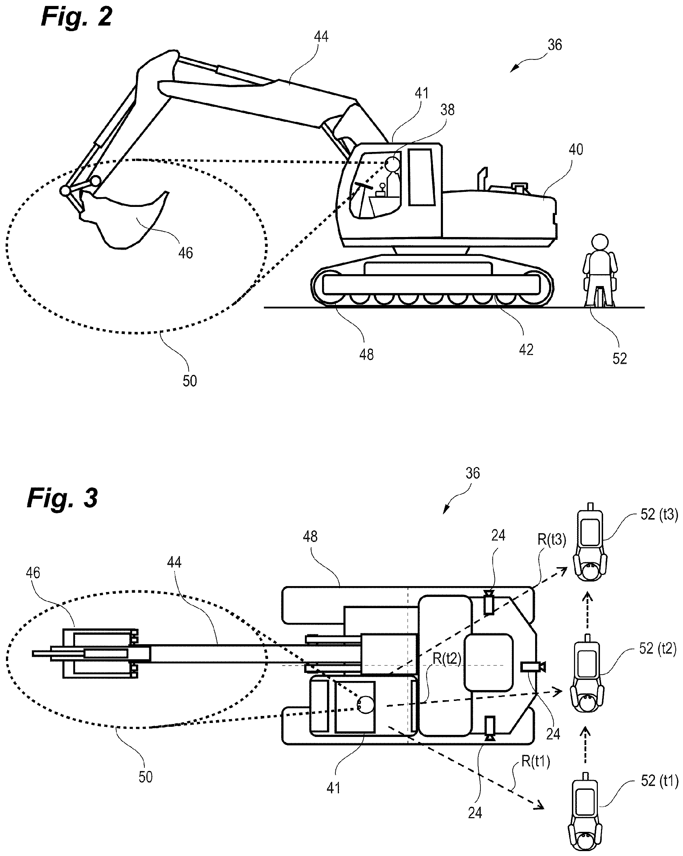

Fig. 2 zeigt schematisch einen Bagger 36 als ein Beispiel eines Fahrzeugs, in dem die offenbarungsgemäße Warnvorrichtung 1 installiert ist. Der Bagger 36 wird durch einen Bediener 38 bedient bzw. gesteuert. Der Bagger 36 ist vorliegend als ein Kettenbagger ausgebildet, der einen Oberwagen 40, der eine Kabine 41 für den Bediener bildet, und einen Unterwagen 42, die zueinander drehbar sind, aufweist. An dem Oberwaren 40 ist ein Baggerarm 44, an dessen Ende eine Baggerschaufel 46 montiert ist, angebracht. Der Unterwagen 42 weist Ketten 48 zum Bewegen des Baggers 36 auf. Eine Aufmerksamkeit des Bediener 38, d.h. ein Aufmerksamkeitsbereich 50, ist in dem in Fig. 2 gezeigten Beispiel auf die Baggerschaufel 46 und einen sich darunter befindlichen Bereich gerichtet. Der Aufmerksamkeitsbereich 50 ist dabei nicht auf eine bestimmte Fokusebene begrenzt. Hinter dem Bagger 36 befindet sich ein Arbeiter 52, der vorliegend als ein Kollisionsobjekt erfasst wird, da er außerhalb des Aufmerksamkeitsbereichs 50 vorhanden ist.

Fig. 3 zeigt eine schematische Draufsicht auf den Bagger 36 aus Fig. 2. Wie bereits in Bezug auf Fig. 2 beschrieben, ist der Aufmerksamkeitsbereich 50 auf die Baggerschaufel 46 gerichtet. In Fig. 3 sind Kameras 24 gezeigt, die an einem hinteren Ende des Oberwagens 40 angebracht sind und bezogen auf den Oberwagen 40 nach links, nach hinten und nach rechts ausgerichtet sind. Es ist anzumerken, dass auf eine Darstellung der Lidar-Sensoren aus Übersichtlichkeitsgründen verzichtet wird. Der Arbeiter 52 schiebt eine Schubkarre und bewegt sich an dem Bagger 36 vorbei, so dass er sich zu den unterschiedlichen Zeitpunkten t1, t2 und t3 an einer jeweiligen Position befindet. Demzufolge ändert sich zu den jeweiligen Zeitpunkten t1, t2, t3 auch eine Richtung R(t1), R(t2), R(t3), in der der Arbeiter 52 in Bezug auf den Oberwagen 40 und damit den Bediener 38 vorhanden ist. Da der Arbeiter 52 außerhalb des Aufmerksamkeitsbereichs 50 vorhanden ist, wird er vorliegend als ein Kollisionsobjekt erfasst.

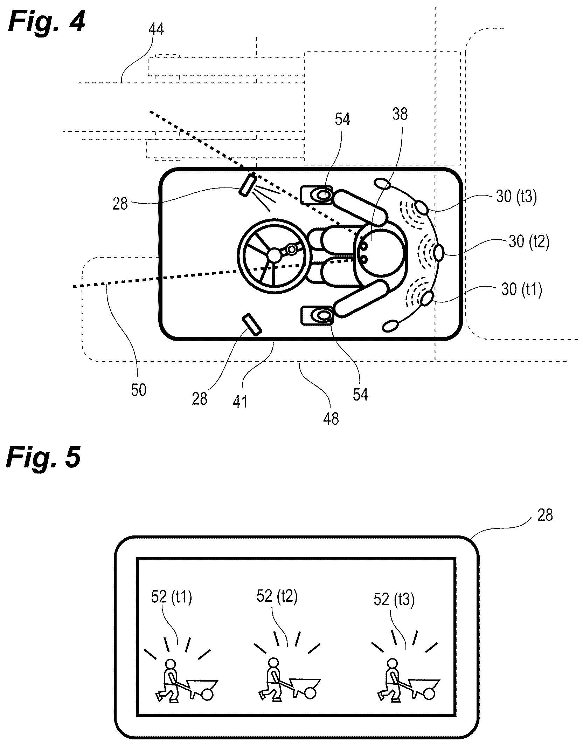

Fig. 4 zeigt eine schematische Draufsicht auf einen Innenraum der Kabine 41 des Baggers 36. In der Kabine 41 sind zwei Displays 28 links und rechts vor dem Bediener 38 in einem Bereich, auf den eine Aufmerksamkeit des Bedieners 38 während der Bedienung des Baggers 36 die meiste Zeit gerichtet ist, angeordnet. Weiterhin sind zwei Bedienhebel 54 vorhanden, über die eine Bedienung des Baggers 36 erfolgen kann. Es ist ein Sitz (nicht gezeigt), auf dem der Bediener 38 während der Bedienung sitzt, in der Kabine 41 angeordnet. Die Bedienhebel 54 und der Sitz entsprechen vorliegend Fahrzeugkomponenten, die mit dem Bediener 38 in direktem Kontakt stehen. In den Bedienhebeln 54 und dem Sitz sind Vibrationselemente 32 angeordnet. Hinter dem Bediener 38 sind mehrere Lautsprecher 30 halbkreisförmig um den Bediener 38 herum angeordnet.

Wie bereits in Bezug auf die Figuren 2 und 3 beschrieben, ist der Aufmerksamkeitsbereich 50 auf eine Baggerschaufel 46 gerichtet, während sich ein Arbeiter 52, der ein Kollisionsobjekt darstellt, hinter dem Bagger 36 vorbeibewegt. Um den Bediener 38 auf den Arbeiter 52 aufmerksam zu machen, werden vorliegend ein optisches, ein akustisches und ein haptisches Warnsignal ausgegeben. Es ist aber auch denkbar, dass nur eines der Warnsignale oder eine Kombination von zwei dieser Warnsignale ausgegeben wird. Das optische Warnsignal wird vorliegend über das Display 28 ausgegeben, da sich dieses im Aufmerksamkeitsbereich 50 befindet. Zusätzlich werden die einzelnen Lautsprecher 30 entsprechend der Richtung R, die sich mit der Bewegung des Arbeiters 52 ändert, nacheinander zu den Zeitpunkten t1, t2 und t3 angesteuert, um das akustisches Warnsignal auszugeben. Dem Bediener 36 kann auf diese Weise die Richtung, in der der Arbeiter 52, d.h. das Kollisionsobjekt, vorhanden ist, mitgeteilt werden. Weiterhin wird das Vibrationselement 32 im Sitz zum Ausgeben des haptischen Warnsignals angesteuert, so dass dem Bediener mitgeteilt wird, dass sich der Arbeiter 52 hinter ihm befindet.

Fig. 5 zeigt eine Ausgabe des optischen Warnsignals über das Display 28. Wie in Bezug auf Fig. 2 erwähnt, sind an dem Oberwagen 40 Kameras 24 angeordnet, die ein Bild von der überwachten Umgebung erfassen. Ein Bild, das den Arbeiter 52 zeigt und von einer der Kameras 24 erfasst wird, kann auf dem Display 28 angezeigt werden, so dass der Bediener 38 den Arbeiter 52 wahrnehmen kann, ohne den Aufmerksamkeitsbereich 50 auf den Arbeiter 52 zu richten. Es kann auch ein zusammengesetztes Bild, das aus mehreren Bildern, die von den Kameras 24 erfasst werden, besteht, auf dem Display 28 angezeigt werden. Der Arbeiter 52 kann in dem angezeigten Bild hervorgehoben, z.B. farbig umrandet oder blinkend, angezeigt werden, um dem Bediener 38 zu signalisieren, dass der Arbeiter 52 das Kollisionsobjekt darstellt. Der Bediener 38 kann durch Betätigen der Eingabetaste den Arbeiter 52 quittieren und eine Ausgabe der Warnsignale unterbinden. Beispielsweise kann das Display 28 als Touch-Display ausgebildet sein und der Bediener 38 kann den Arbeiter 52 durch Antippen auf dem Display 28 quittieren.

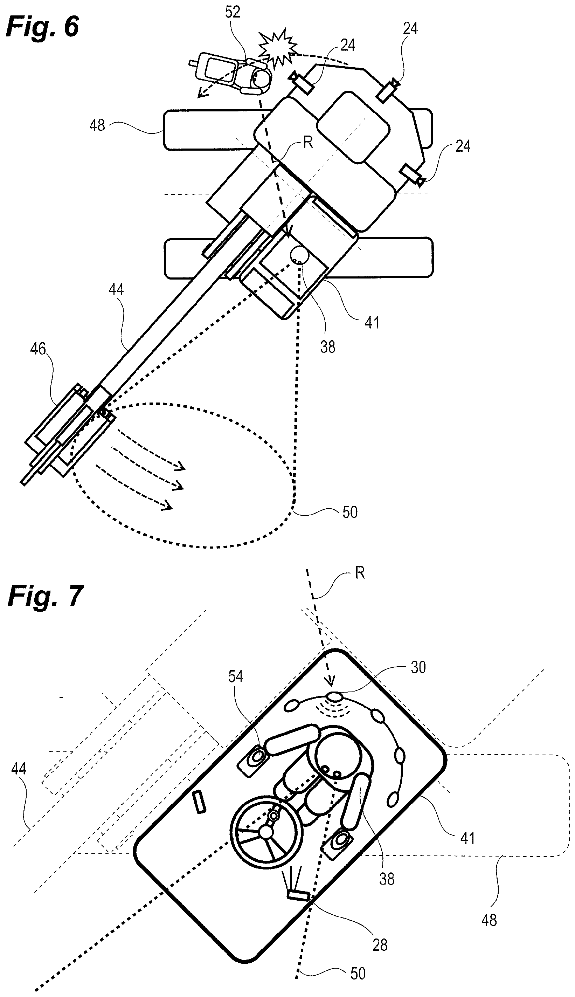

Fig. 6 zeigt eine schematische Draufsicht auf den Bagger 36 während einer Drehbewegung des Oberwagens 40. Der Aufmerksamkeitsbereich 50 des Bedieners 38 ist auf einen Bereich gerichtet, zu dem die Baggerschaufel 46 hin geschwenkt wird. Der Arbeiter 52 befindet sich, vom Oberwagen 40 ausgesehen, rechts hinten in der Richtung R. Da der Arbeiter 52 einen geringen Abstand zu dem Bagger 36 aufweist, befindet er sich innerhalb eines Schwenkradius eines hinteren Endes des Oberwagens 40.

Fig. 7 zeigt eine schematische Draufsicht auf die Kabine 41 des Baggers 36. Wie in Bezug auf Fig. 6 beschrieben, ist der Aufmerksamkeitsbereich 50 auf einen Bereich gerichtet, zu dem die Baggerschaufel 46 hin geschwenkt wird und der Arbeiter 52 als das Kollisionsobjekt befindet sich in der Richtung R. Um den Bediener 38 auf den Arbeiter 52 aufmerksam zu machen, werden vorliegend ein optisches, ein akustisches und ein haptisches Warnsignal ausgegeben. Das optische Warnsignal wird über das Display 28, das vorne rechts von dem Bediener 38 angeordnet ist, ausgegeben, da es im Aufmerksamkeitsbereich 50 des Bedieners 38 liegt. Zudem wird das optische Warnsignal über den Lautersprecher 30 ausgegeben, der der Richtung R entspricht. Außerdem wird das haptische Vibrationssignal über die Vibrationselemente 32 in dem Sitz und in dem rechten Bedienhebel 54 ausgegeben, um dem Bediener 38 mitzuteilen, dass sich der Arbeiter 52 als das Kollisionsobjekt rechts hinten in Bezug auf den Oberwagen 40, d.h. den Bediener 38, befindet.

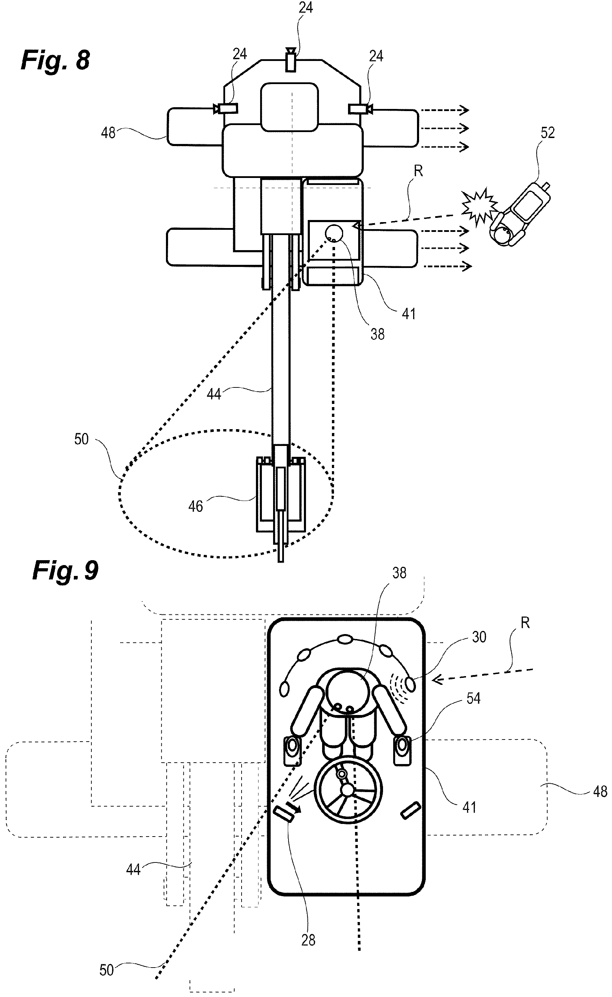

Fig. 8 zeigt eine schematische Draufsicht auf den Bagger 36 während einer Fahrt von links nach rechts mit einem um 90° gedrehten Oberwagen 40. Der Aufmerksamkeitsbereich 50 ist auf einen Bereich, der in Bezug auf die Baggerschaufel 46 leicht nach rechts versetzt ist, gerichtet, so dass ein Herabfallen von Transportgut erkannt werden kann. Links in Bezug auf den Oberwagen 40, d.h. den Bediener 38, befindet sich in der Richtung R der Arbeiter 52 und wird als das Kollisionsobjekt erfasst.

Fig. 9 zeigt eine Draufsicht auf die Kabine 41 des Baggers 36. Wie in Bezug auf Fig. 8 beschrieben, befindet sich der Arbeiter 52 in der Richtung R. Um dem Bediener 38 die Anwesenheit des Arbeiters 52 als das Kollisionsobjekt mitzuteilen, werden vorliegend ein optisches, ein akustisches und ein haptisches Warnsignal ausgegeben. Das optische Warnsignal wird über das Display 28, das links vor dem Bediener 38 angeordnet ist, ausgegeben, da dieses Display 28 im Aufmerksamkeitsbereich 50 des Bedieners 38 ist. Dabei kann dem Bediener 38 die Richtung R durch Anzeigen eines entsprechenden Pfeils auf dem Display 28 angezeigt werden. Das akustische Warnsignal wird über den Lautsprecher 30 ausgegeben, der der Richtung R entspricht. Außerdem wird das haptische Warnsignal über den linken Bedienhebel 54 ausgegeben. Demzufolge kann der Bediener 38 zuverlässig auf den Arbeiter 52 als das Kollisionsobjekt hingewiesen werden.

Obenstehend wurden Ausführungsformen der vorliegenden Offenbarung beschrieben. Es ist anzumerken, dass die beschriebenen Ausführungsformen lediglich nicht einschränkende Beispiele zur Implementierung der vorliegenden Offenbarung darstellen.

### Bezugszeichenliste

- 1: Warnvorrichtung
- 2: Aufmerksamkeitsbereich-Bestimmungseinheit
- 4: Umgebungsüberwachungseinheit
- 6: Ausgabeeinheit
- 8: Eingabeeinheit
- 10: Steuereinheit
- 12: Aufmerksamkeitsbereich-Bestimmungsabschnitt
- 14: Umgebungsüberwachungsabschnitt
- 16: Ausgabeabschnitt
- 18: Eingabeabschnitt
- 20: Bediener-Kamera
- 22: Haltungssensor
- 24: Kamera
- 26: Lidar-Sensor
- 28: Display
- 30: Lautsprecher
- 32: Vibrationselement
- 34: Eingabetaste
- 36: Bagger
- 38: Bediener
- 40: Oberwagen
- 42: Unterwagen
- 44: Baggerarm
- 46: Baggerschaufel
- 48: Ketten
- 50: Aufmerksamkeitsbereich
- 52: Arbeiter
- 54: Bedienhebel
- R: Richtung

## Patentansprüche

1. Warnvorrichtung (1) zum Warnen eines Bedieners (38) eines Fahrzeugs (36) vor einem Kollisionsobjekt (52) während einer Bedienung mit:
einer Aufmerksamkeitsbereich-Bestimmungseinheit (2), die ausgebildet ist, um einen Aufmerksamkeitsbereich (50), der ein Bereich ist, auf den eine Aufmerksamkeit des Bedieners (38) gerichtet ist, zu bestimmen,
einer Umgebungsüberwachungseinheit (4), die ausgebildet ist, um eine Umgebung um das Fahrzeug (36) herum zumindest teilweise zu überwachen, eine Kollisionsgefahr für ein Objekt, das in der überwachten Umgebung vorhanden ist, zu bestimmen, und ein Objekt, für das eine Kollisionsgefahr besteht und das außerhalb des Aufmerksamkeitsbereichs (50) vorhanden ist, als das Kollisionsobjekt (52) zu erfassen, und
einer Ausgabeeinheit (6), die ausgebildet ist, um ein Warnsignal beim Erfassen des Kollisionsobjekts (52) auszugeben.

2. Warnvorrichtung (1) gemäß Anspruch 1, wobei
die Ausgabeeinheit (6) ausgebildet ist, um ein optisches und/oder ein akustisches und/oder ein haptisches Warnsignal auszugeben.

3. Warnvorrichtung (1) gemäß einem der vorhergehenden Ansprüche, wobei
die Umgebungsüberwachungseinheit (4) ausgebildet ist, um die Kollisionsgefahr für ein Objekt in Abhängigkeit eines Abstands und/oder einer relativen Geschwindigkeit zwischen dem Fahrzeug (36) und dem Objekt zu bestimmen.

4. Warnvorrichtung (1) gemäß einem der vorhergehenden Ansprüche, wobei
die Umgebungsüberwachungseinheit (4) ausgebildet ist, um die Kollisionsgefahr für ein Objekt in Abhängigkeit eines Typs des Fahrzeugs (36) und/oder eines Einsatzzwecks des Fahrzeugs (36) zu bestimmen.

5. Warnvorrichtung (1) gemäß einem der vorhergehenden Ansprüche, wobei
die Umgebungsüberwachungseinheit (4) ausgebildet ist, die Kollisionsgefahr für ein Objekt in Abhängigkeit einer Bedienung des Fahrzeugs (36) zu bestimmen.

6. Warnvorrichtung (1) gemäß einem der vorhergehenden Ansprüche, wobei
die Ausgabeeinheit (6) mindestens ein optisches Anzeigeelement (28) aufweist, das bevorzugt in einem für das Fahrzeug (36) typischen Aufmerksamkeitsbereich (50) angeordnet ist.

7. Warnvorrichtung (1) gemäß Anspruch 6, wobei
die Ausgabeeinheit (6) und das optische Anzeigeelement (28) ausgebildet sind, um auf dem optischen Anzeigeelement (28) eine Richtung (R), in der das Kollisionsobjekt (52) vorhanden ist, anzuzeigen.

8. Warnvorrichtung (1) gemäß einem der Ansprüche 6 oder 7, wobei
die Umgebungsüberwachungseinheit (4) ein Bilderfassungselement (24) aufweist, und
die Anzeigeeinheit (6) und das optische Anzeigeelement (28) ausgebildet sind, um ein vom dem Bilderfassungselement (24) erfasstes Bild auf dem optischen Anzeigeelement (28) anzuzeigen oder zu überlagern.

9. Warnvorrichtung (1) gemäß einem der Ansprüche 6 bis 8, wobei
die Ausgabeeinheit (6) mehrere optische Anzeigeelemente (28) aufweist und ausgebildet ist, das Warnsignal über das optische Anzeigeelement (28) auszugeben, das in dem Aufmerksamkeitsbereich (50) des Bedieners (38) vorhanden ist oder diesem am nächsten ist.

10. Warnvorrichtung (1) gemäß einem der vorhergehenden Ansprüche, wobei
die Ausgabeeinheit (6) mindestens ein haptisches Ausgabeelement (32) aufweist, das in/an einer mit dem Bediener (38) in direktem Kontakt stehenden Fahrzeugkomponente (54) angeordnet ist.

11. Warnvorrichtung (1) gemäß Anspruch 10, wobei
die Ausgabeeinheit (6) mehrere haptische Ausgabeelemente (32), die in/an einer oder mehreren mit dem Bediener (38) in direktem Kontakt stehenden Komponente(n) (54) angeordnet sind, aufweist und ausgebildet ist, um die haptischen Ausgabeelemente (32) entsprechend einer Richtung (R), in der das Kollisionsobjekt (52) vorhanden ist, anzusteuern.

12. Warnvorrichtung (1) gemäß einem der vorhergehenden Ansprüche, wobei
die Ausgabeeinheit (6) mindestens einen Lautsprecher (30) oder einen Kopfhörer aufweist.

13. Warnvorrichtung (1) gemäß Anspruch 12, wobei
die Ausgabeeinheit (6) mehrere Lautsprecher (30) aufweist oder der Kopfhörer für eine räumliche Audioausgabe ausgebildet ist, und
die Ausgabeeinheit (6) ausgebildet ist, um das akustische Warnsignal entsprechend einer Richtung (R), in der das Kollisionsobjekt (52) vorhanden ist, auszugeben.

14. Warnvorrichtung (1) gemäß einem der vorhergehenden Ansprüche, mit:
einer Eingabeeinheit (8), die ausgebildet ist, um eine Eingabe zum Quittieren des Kollisionsobjekts (52) und/oder eine Eingabe zum Initialisieren einer Umgebung, in der ein Einsatz des Fahrzeugs (36) erfolgen soll, zu empfangen.

15. Warnvorrichtung (1) gemäß einem der vorhergehenden Ansprüche, wobei
die Ausgabeeinheit (6) ausgebildet ist, um das Warnsignal entsprechend der Kollisionsgefahr anzupassen und auszugeben.
